# EUROPÄISCHE PATENTSCHRIFT

(11) **EP 2 424 906 B1**
(45) Veröffentlichungstag und Bekanntmachung des Hinweises auf die Patenterteilung: **13.02.2013**
(21) Anmeldenummer: 10711347.4
(22) Anmeldetag: 26.03.2010
(51) Int. Cl.: C08F 20/28, C08F 220/28, B01D 19/04, C10G 33/04

(54) **VERWENDUNG BIOLOGISCH ABBAUBARER ALKOXYLIERTER (METH)ACRYLAT-COPOLYMERE ALS ROHÖL-EMULSIONSSPALTER**
USE OF BIODEGRADABLE ALKOXYLATED (METH)ACRYLATE COPOLYMERS AS CRUDE OIL DEMULSIFIERS
UTILISATION DE COPOLYMÈRES DE (MÉTH)ACRYLATE ALKOXYLÉS BIODÉGRADABLES EN TANT QUE DÉSÉMULSIFIANTS D'ÉMULSIONS DE PÉTROLE BRUT

(30) Priorität: 28.04.2009 DE 102009019177
(43) Veröffentlichungstag der Anmeldung: 07.03.2012
(73) Patentinhaber: Clariant Finance (BVI) Limited, Road Town, Tortola (VG)
(72) Erfinder: SCHAEFER, Carsten, 84453 Mühldorf (DE); COHRS, Carste, 60316 Frankfurt (DE); DILSKY, Stefan, 97218 Gerbrunn (DE)
(74) Vertreter: Mikulecky, Klaus
(86) Internationale Anmeldenummer: PCT/EP2010/001919
(87) Internationale Veröffentlichungsnummer: WO 2010/124773

(56) Entgegenhaltungen:
- DE-A1- 19 603 696

## Beschreibung

Die vorliegende Erfindung betrifft die Verwendung alkoxylierter (Meth)acrylatCopolymere zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im Allgemeinen sogenannter Rohöl- oder Erdölemulsionsspalter, oder auch kurz "Erdölspalter" genannt. Es handelt sich bei Erdölspaltern um grenzflächenaktive polymere Verbindungen, die in der Lage sind, innerhalb kurzer Zeit die erforderliche Trennung der Emulsionsbestandteile zu bewirken.

Als Demulgatoren kommen hauptsächlich alkoxylierte Alkylphenol-FormaldehydHarze, nichtionische Alkylenoxid-Blockcopolymere sowie mit Bisepoxiden vernetzte Varianten zum Einsatz. Übersichten liefern "Something Old, Something New: A Discussion about Demulsifiers", T. G. Balson, S. 226-238 in Proceedings in the Chemistry in the Oil Industry VIII Symposium, 3. - 5.11.2003, Manchester, GB, sowie "Crude-Oil Emulsions: A State-Of-The-Art Review", S. Kokal, S. 5-13, Society of Petroleum Engineers SPE 77497.

US-4 032 514 offenbart die Verwendung von Alkylphenol-Aldehydharzen zur Spaltung von Erdölemulsionen. Diese Harze sind aus der Kondensation eines para-Alkylphenols mit einem Aldehyd, meistens Formaldehyd, erhältlich.

Solche Harze werden oft in alkoxylierter Form verwendet, wie es beispielsweise in DE-A-24 45 873 offenbart ist. Hierzu werden die freien phenolischen OH-Gruppen mit einem Alkylenoxid umgesetzt.

Neben den freien phenolischen OH-Gruppen können auch freie OH-Gruppen von Alkoholen oder NH-Gruppen von Aminen alkoxyliert werden, wie beispielsweise in US-5 401 439 offenbart wird.

Als weitere Erdölemulsionsspalter sind in US-4 321 146 Alkylenoxid-Blockcopolymere und in US-5 445 765 alkoxylierte Polyethylenimine offenbart. Die offenbarten Spalter können als einzelne Komponenten, in Mischungen mit anderen Emulsionsspaltern, oder auch als vernetzte Produkte eingesetzt werden.

Alkoxylierte dendritische Polyester (Dendrimere) sind als nach OECD 306 biologisch abbaubare Erdölemulsionsspalter in DE-A-103 29 723 offenbart..

Ebenfalls nach OECD 306 biologisch abbaubare Spalter sind in DE-A-103 25 198 offenbart. Hierbei handelt es sich um alkoxylierte, vernetzte Polyglycerine.

Die unterschiedlichen Eigenschaften (z. B. Asphalten-, Paraffin- und Salzgehalt, chemische Zusammensetzung der natürlichen Emulgatoren) und Wasseranteile verschiedener Rohöle machen es unabdingbar, die bereits vorhandenen Erdölspalter weiter zu entwickeln. Insbesondere steht eine niedrige Dosierrate und breite Anwendbarkeit des einzusetzenden Erdölspalters neben der anzustrebenden höheren Effektivität aus ökonomischer und ökologischer Sicht im Vordergrund. Weiterhin werden zunehmend Emulsionsspalter benötigt, die eine gute biologische Abbaubarkeit sowie eine geringe Bioakkumulation aufweisen, um die in Diskussion geratenen Produkte auf Alkylphenolbasis zu ersetzen.

Es ergab sich somit die Aufgabe, neue Erdölspalter zu entwickeln, die den bereits bekannten Erdölspaltern auf Alkylphenolbasis in der Wirkung gleichwertig oder überlegen sind, in noch niedrigeren Dosen eingesetzt werden können und eine bessere ökologische Abbaubarkeit aufweisen.

Es stellte sich überraschenderweise heraus, dass alkoxylierte (Meth)acrylatCopolymere bereits bei sehr niedriger Dosierung eine ausgezeichnete Wirkung als Erdölspalter zeigen. Zudem zeigen sie deutlich bessere biologische Abbaubarkeiten (nach OECD 306) im Vergleich zu herkömmlichen kommerziellen Emulsionsspaltern.

Gegenstand der Erfindung ist daher die Verwendung von Copolymeren, welche durch Polymerisation der Monomere (A) und (B) erhältlich sind, wobei
(A) ein Monomer der Formel (I) ist 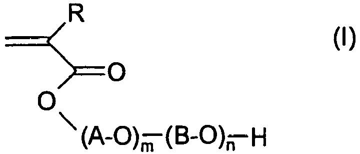 worin
   - A: für eine C₂- bis C₄-Alkylengruppe,
   - B: für eine von A unterschiedliche C₂- bis C₄-Alkylengruppe,
   - R: für Wasserstoff oder Methyl,
   - m: für eine Zahl von 1 bis 500,
   - n: für eine Zahl von 1 bis 500 stehen, und
(B) ein ethylenisch ungesättigtes Monomer ist, das eine aliphatische Kohlenwasserstoffgruppe enthält,
zur Spaltung von Öl/Wasser-Emulsionen in Mengen von 0,0001 bis 5 Gew.-% bezogen auf den Ölgehalt der zu spaltenden Emulsion.

In einer bevorzugten Ausführungsform werden Copolymere verwendet, welche durch Polymerisation der Monomere (A), (B) und (C) erhältlich sind, wobei (C) ein ethylenisch ungesättigtes Monomer ist, das eine aromatische Gruppe enthält.

Der Begriff, dass die Copolymere durch die Polymerisation der Monomere (A), (B) und gegebenenfalls (C) erhältlich sind, bedeutet, dass die Copolymere Struktureinheiten enthalten, die sich aus den Monomeren (A), (B) und gegebenenfalls (C) ableiten, wenn diese der radikalischen Polymerisation unterzogen werden.

Das erfindungsgemäße Copolymer besitzt im Allgemeinen übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine beispielsweise schwefelhaltige Gruppe aus einem Kettenübertragungsreagenz.

Der molare Anteil der Monomere beträgt in einer bevorzugten Ausführungsform 0,1 bis 99,9 % für das Monomer (A) und 0,1 bis 99,9 % für das Monomer (B), insbesondere 1 bis 99,5 % für das Monomer (A) und 0,5 bis 99 % für das Monomer (B), speziell 10 bis 90 % für das Monomer (A) und 10 bis 90 % für das Monomer (B).

Der molare Anteil der Monomere beträgt in einer weiteren bevorzugten Ausführungsform 1 bis 80 % für Monomer (A), 0,1 bis 80 % für Monomer (B) und 0,1 bis 80 % für Monomer (C), insbesondere 10 bis 70 % für Monomer (A), 10 bis 60 % für Monomer (B) und 1 bis 60 % für Monomer (C).

In einer weiteren bevorzugten Ausführungsform ergänzen sich die Monomere (A) und (B) zu 100 mol-%.

In einer weiteren bevorzugten Ausführungsform ergänzen sich die Monomere (A), (B) und (C) zu 100 mol-%.

Die Alkylenoxideinheiten (A-O)ₘ und (B-O)ₙ können entweder statistisch oder wie im Falle einer bevorzugten Ausführungsform blockartig angeordnet vorliegen.

In einer bevorzugten Ausführungsform steht (A-O)ₘ für einen Block Propylenoxid-Einheiten und (B-O)ₙ für einen Block Ethylenoxid-Einheiten, oder (A-O)ₘ für einen Block Ethylenoxid-Einheiten und (B-O)ₙ für einen Block Propylenoxid-Einheiten, wobei der molare Anteil der Ethylenoxid-Einheiten bevorzugt 50 bis 98 %, insbesondere 55 bis 95 %, besonders bevorzugt 60 bis 93 %, bezogen auf die Summe (100 %) der Ethylenoxid- und Propylenoxid-Einheiten, beträgt.
m steht vorzugsweise für eine Zahl von 2 bis 50.
n steht vorzugsweise für eine Zahl von 2 bis 50.

Die Zahl der Alkylenoxideinheiten (n + m) beträgt bevorzugt 2 bis 500, insbesondere 4 bis 100, besonders bevorzugt 5 bis 80.

Bevorzugte Monomere (B) entsprechen der Formel (II) 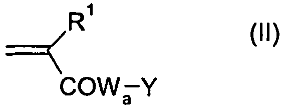 worin
- R¹: für Wasserstoff oder Methyl,
- Y: für einen linearen, verzweigten oder cyclischen aliphatischen Kohlenwasserstoffrest mit 1 bis 30, vorzugsweise 4 bis 28, insbesondere 6 bis 24 Kohlenstoffatomen, der gesättigt oder ungesättigt sein kann, und der Heteroatome ausgewählt aus O, N und S enthalten kann,
- Wₐ: für Sauerstoff oder die Gruppe -NH- stehen.

Zu den Monomeren (B) gehören vorzugsweise Ester (Wa = Sauerstoff) und Amide (Wₐ = -NH-) der Acrylsäure und Methacrylsäure, in denen Y für folgende Gruppen steht: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Oktyl-, Isooctyl-, Nonyl-, Lauryl-, Cetyl-, Stearyl-Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl sowie die Alkyl-Kettenschnitte C_{16/18} oder C_{20/24}.

Bevorzugte Monomere (B) sind die folgenden Alkylester bzw. Alkylamide der Acrylsäure und Methacrylsäure: Methyl-, Ethyl-, Propyl-, Butyl-, Isobutyl-, 2-Ethoxyethyl, Myristyl-, Octadecyl-, und besonders bevorzugt 2-Ethylhexyl-, Lauryl- und Stearyl-,

Bevorzugte Monomere (C) entsprechen den Formeln (IIIa) oder (IIIb): 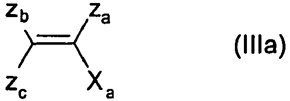 worin
- Xₐ: für einen aromatischen oder araliphatischen Rest mit 3 bis 30 C-Atomen, der gegebenenfalls Heteroatome ausgewählt aus O, N und S enthalten kann,
- Zₐ: für H oder C₁- bis C₄-Alkyl,
- Z_{b}: für H oder C₁- bis C₄-Alkyl, und
- Z_{c}: für H oder C₁- bis C₄-Alkyl stehen; 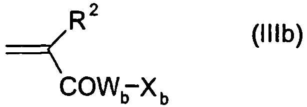
worin
- R²: für Wasserstoff oder Methyl,
- X_{b}: für einen aromatischen oder araliphatischen Rest mit 3 bis 30 C-Atomen, der gegebenenfalls Heteroatome ausgewählt aus O, N und S enthalten kann,
- W_{b}: für Sauerstoff oder die Gruppe -NH- stehen.

Zu den Monomeren (C) gehören vorzugsweise Ester (Wₐ = Sauerstoff) und Amide (Wₐ = -NH-) der Acrylsäure und Methacrylsäure, in denen Xₐ oder X_{b} für Phenyl-, Benzyl-, Tolyl-, 2-Phenoxyethyl- oder Phenethyl-Gruppen steht.

Vorzugsweise stehen Xₐ oder X_{b} für aromatische oder araliphatische Reste mit 6 bis 24 C-Atomen.

Weitere geeignete Monomere (C) sind vinylaromatische Monomere wie Styrol und seine Derivate wie beispielsweise Vinyltoluol und alpha-Methylstyrol. Bei der aromatischen Einheit kann es sich auch um Heteroaromaten handeln, wie z. B. in 1-Vinylimidazol.
Besonders bevorzugte Monomere (C) sind Styrol, 1-Vinylimidazol, Benzyl(Meth)acrylat, 2-Phenoxyethyl(Meth)acrylat und Phenethyl(Meth)acrylat.

Die erfindungsgemäßen Copolymere besitzen ein Molekulargewicht von vorzugsweise 10³ g/mol bis 10⁹ g/mol, besonders bevorzugt von 10³ bis 10⁷ g/mol, insbesondere 3·10³ bis 10⁵ g/mol.

Die Herstellung der erfindungsgemäßen Copolymere kann mittels radikalischer Polymerisation erfolgen. Die Polymerisationsreaktion kann kontinuierlich, diskontinuierlich oder semi-kontinuierlich durchgeführt werden.
Die Polymerisationsreaktion wird vorzugsweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, Isopropanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykolmonoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodüsobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(11)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z.B. Tetrachlorkohlenstoff, Chloroform und Methylenchlorid,

Ein bevorzugter Gegenstand vorliegender Erfindung ist die Verwendung der alkoxylierten (Meth)acrylat-Copolymere als Spalter für ÖI/Wässer-Emulsionen in der Erdölförderung.

Ein wichtiges Kriterium für Erdölspalter ist seine Wasserzahl, die die Verteilung des Spalters in einer wässrigen und einer organischen Phase beschreibt und dadurch ein direktes Maß für den HLB-Wert des Erdölspalters ist. Die Einteilung in eher lipophile oder eher hydrophile Erdölspalter kann durch die Bestimmung der Wasserzahl erfolgen. Je höher die Wasserzahl ist, desto hydrophiler ist die untersuchte Verbindung. Zur Bestimmung der Wasserzahl wird ein Gramm des Erdölspalters in 30 mL einer Mischung aus Dioxan und Toluol im Volumenverhältnis 97:3 gelöst. Dieser Lösung wird so lange Wasser zugesetzt, bis eine bleibende Trübung auftritt. Die zugegebene Wassermenge in mL ist die Wasserzahl. Eine Obergrenze für diese Bestimmungsmethode sind Wasserzahlen ab 22,0 mL.

Die Wasserzahl des Erdölspalters hat auf seine Eigenschaften wesentlichen Einfluss. Ist die Wasserzahl größer, dann tritt die Spaltung der Erdölemulsion meist schneller ein, sie ist jedoch eher unvollständig, d. h. dass Öl im abgetrennten Wasser verbleibt. Ist die Wasserzahl kleiner, dann tritt die Spaltung der Erdölemulsion meist langsamer ein, sie ist jedoch eher vollständig, d. h. dass nur sehr wenig Öl im abgetrennten Wasser verbleibt. Aufgrund der verschiedenen Charakteristika von Rohölemulsionen ist es wichtig, dass es Erdölspaltern mit einer großen Bandbreite an Wasserzahlen gibt. Vorzugsweise beträgt die Wasserzahl mindestens 5. Die Wasserzahl kann durch die Menge an EO (Wasserzahl steigt mit steigendem EO-Gehalt), PO (Wasserzahl sinkt mit steigendem PO-Gehalt), die Größe von Kohlenwasserstoffresten (mit zunehmender Zahl von Kohlenstoffatomen sinkt die Wasserzahl) und durch das Molekulargewicht des Polymers (mit zunehmendem Molekulargewicht sinkt die Wasserzahl) selbst beeinflusst werden.

Zur Verwendung als Erdölspalter werden die alkoxylierten (Meth)acrylat-Copolymere den Wasser in Öl-Emulsionen zugesetzt, was vorzugsweise in Lösung geschieht. Als Lösungsmittel für die alkoxylierten (Meth)acrylatCopolymere werden alkoholische Lösungsmittel bevorzugt. Die alkoxylierten (Meth)acrylat-Copolymere werden in Mengen von 0,0001 bis 5, vorzugsweises 0,0005 bis 2, insbesondere 0,0008 bis 1 und speziell 0,001 bis 0,1 Gew.-% bezogen auf den Ölgehalt der zu spaltenden Emulsion verwendet.

### Beispiele

### Allgemeine Polymerisationsvorschrift 1 (Copolymer aus Monomer A und B)

In einem Kolben mit Rührer, Rückflusskühler, Innenthermometer und Stickstoffeinleitung wurde das Monomer A, Monomer B und ggf. der Molekulargewichtsregler in Lösungsmittel unter Stickstoffeinleitung vorgelegt. Dann wurde die Temperatur unter Rühren auf 80 °C gebracht und innerhalb einer Stunde eine Lösung des Initiators zudosiert. Im Anschluss wurde noch für 5 Stunden bei dieser Temperatur weitergerührt. Die Molmasse des Copolymers wurde über GPC (Referenz: Polyethylenglykol) analysiert.

### Allgemeine Polymerisationsvorschrift 2 (Copolymer aus Monomer A, B und C)

In einem Kolben mit Rührer, Rückflusskühler, Innenthermometer und Stickstoffeinleitung wurde das Monomer A, Monomer B, Monomer C und ggf. der Molekulargewichtsregler in Lösungsmittel unter Stickstoffeinleitung vorgelegt. Dann wurde die Temperatur unter Rühren auf 80 °C gebracht und innerhalb einer Stunde eine Lösung des Initiators zudosiert. Im Anschluss wurde noch für 5 Stunden bei dieser Temperatur weitergerührt, dann das Lösemittel im Vakuum entfernt. Die Molmasse des Copolymers wurde über GPC (Referenz: Polyethylenglykol) analysiert.

Die folgenden Tabellen enthalten Synthesebeispiele, bei denen das Polymer nach Synthesevorschrift 1 oder 2 hergestellt wurde.

| Beispiel | Äquivalente Monomer A (mittleres MW) | Zahl PO | Zahl EO | Äquivalente Monomer B | Äquivalente Monomer C | Regler ja(+)/nein(-) | Wasserzahl | Mw |
|---|---|---|---|---|---|---|---|---|
| 1 | 1,5 (350) | 2 | 3 | 1 (LMA) | 1 (BMA) | + | 8,6 | 5800 |
| 2 | 1 (350) | 2 | 3 | 1 (LMA) | - | - | 8,4 | 10600 |
| 3 | 1 (350) | 2 | 3 | 1 (LMA) | - | + | 8,4 | 6100 |
| 4 | 2 (350) | 2 | 3 | 1 (EHMA) | 1 (Styrol) | + | 8,8 | 6200 |
| 5 | 2 (350) | 2 | 3 | 1 (SA) | - | - | 7,9 | 9900 |
| 6 | 2 (350) | 2 | 3 | 1 (SA) | 1 (Styrol) | - | 8,8 | 9300 |
| 7 | 1 (500) | 2 | 7 | 1 (LMA) | - | + | 11,8 | 6100 |
| 8 | 2 (500) | 2 | 7 | 1 (LMA) | 1 (Styrol) | + | 12,2 | 6200 |
| 9 | 1 (500) | 2 | 7 | 1 (EHMA) | - | + | 11,6 | 6800 |
| 10 | 1 (600) | 2 | 9 | 1 (LMA) | - | + | 14,4 | 6500 |
| 11 | 1 (600) | 2 | 9 | 1 (EHMA) | - | + | 14,6 | 6600 |
| 12 | 1 (750) | 2 | 13 | 1 (SA) | - | - | 20,0 | 12000 |
| 13 | 1 (750) | 2 | 13 | 1 (SA) | 1 (Styrol) | - | > 22,0 | 14000 |
| 14 | 1 (750) | 2 | 13 | 2 (LMA) | 2 (Styrol) | - | 16,8 | 7900 |
| 15 | 1 (750) | 2 | 13 | 1 (MMA) | - | - | > 22,0 | 8200 |
| 16 | 1 (750) | 2 | 13 | 2 (MMA) | 2 (Styrol) | - | 18,7 | 8500 |
| 17 | 1 (750) | 2 | 13 | 1 (CMA) | 1 (BMA) | + | 17,9 | 6600 |
| 18 | 1 (750) | 2 | 13 | 1 (CMA) | 1 (Styrol) | + | 18,2 | 6900 |
| 19 | 1 (850) | 2 | 15 | 1 (EHMA) | - | + | > 22 | 6900 |
| 20 | 1 (850) | 2 | 15 | 2 (LMA) | 2 (Styrol) | - | 18,1 | 11400 |
| 21 | 1 (750) | 5 | 7 | 1 (LMA) | 1 (BMA) | + | 17,1 | 6800 |
| 22 | 1 (750) | 5 | 7 | 2 (LMA) | 2 (Styrol) | - | 14,4 | 9400 |
| 23 | 1 (750) | 5 | 7 | 1 (EHMA) | - | + | 18,2 | 5900 |
| 24 | 2 (750) | 5 | 7 | 1 (EHMA) | 2 (Styrol) | + | 18,4 | 6200 |
| 25 | 2 (750) | 5 | 7 | 1 (CMA) | - | - | 19,2 | 9800 |
| 26 | 1 (750) | 5 | 7 | 1 (SA) | 1 (Styrol) | - | 18,3 | 11000 |
| 27 | 1 (1000) | 5 | 13 | 1 (LMA) | - | + | > 22,0 | 7200 |
| 28 | 1 (1000) | 5 | 13 | 2 (EHMA) | 2 (Styrol) | + | 19,7 | 7400 |
| 29 | 1 (1000) | 10 | 6 | 1 (MMA) | - | + | 16,4 | 8000 |
| 30 | 1 (1000) | 10 | 6 | 1 (MMA) | 1 (Styrol) | - | 15,9 | 15000 |
| 31 | 1 (2000) | 10 | 29 | 2 (SA) | 2 (BMA) | + | > 22,0 | 8200 |
| 32 | 1 (2000) | 10 | 29 | 2 (SA) | 2 (Styrol) | + | > 22,0 | 8400 |

| | | | | | | | | |
|---|---|---|---|---|---|---|---|---|
| MW = Durchschnittliches Molekulargewicht PO = Propylenoxid EO = Ethylenoxid Mw = Polymer Gewichtsmittel LMA = Laurylmethacrylat EHMA = 2-Ethylhexylmethacrylat SA = Stearylacrylat MMA = Methylmethacrylat CMA = Cyclohexylmethacrylat BMA = Benzylmethacrylat Regler = Dodecanthiol | | | | | | | | |

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (50 °C) gestellt und die Wasserabscheidung verfolgt.

Nach beendeter Emulsionsspaltung wurden Proben von dem Öl aus dem oberen Teil des Spalterglases (sog. Topöl) entnommen und deren Wassergehalt nach Karl Fischer bestimmt. Auf diese Weise konnten die neuen Spalter nach Wasserabscheidung sowie Entwässerung des Öls beurteilt werden.

### Spaltwirkung der beschriebenen Spalter

Ursprung der Rohölemulsion: Hebertshausen, Deutschland
Wassergehalt der Emulsion: 48 %
Demulgiertemperatur: 50 °C

Die Wirksamkeit der alkoxylierten (Meth)acrylat-Copolymere als Emulsionsspalter im Vergleich zu Dissolvan^{®} 3567-1c (ein alkoxyliertes Alkylphenolharz) bei einer Dosierrate von 175 ppm wird in folgender Tabelle dargestellt.

| Beispiel | Copolymer gemäß | Wasserabscheidung in ml pro Zeit in min | | | | | | | Wasser im Topöl [%] |
|---|---|---|---|---|---|---|---|---|---|
| | | 5 | 10 | 20 | 30 | 60 | 90 | 120 | |
| 33 | Produkt 1 | 15 | 28 | 34 | 34 | 36 | 36 | 38 | 1,0 |
| 34 | Produkt 2 | 0 | 0 | 4 | 8 | 32 | 34 | 37 | 1,2 |
| 35 | Produkt 7 | 0 | 0 | 5 | 15 | 34 | 42 | 45 | 0,5 |
| 36 | Produkt 10 | 0 | 0 | 0 | 0 | 4 | 11 | 26 | 0,3 |
| 37 | Produkt 14 | 0 | 4 | 26 | 34 | 44 | 44 | 45 | 0,9 |
| 38 | Produkt 19 | 0 | 0 | 0 | 0,5 | 4 | 22 | 32 | 1,5 |
| 39 (V) | Dissolvan 3567-1 c | 0 | 0 | 0,5 | 0,5 | 2 | 10 | 12 | 1,5 |

Die biologische Abbaubarkeit der alkoxylierten (Meth)acrylat-Copolymere (closed bottle test nach OECD 306) im Vergleich zu Standardprodukten wird in folgender Tabelle angegeben.

| Beispiel | Copolymer gemäß | Biologische Abbaubarkeit in % nach | |
|---|---|---|---|
| | | 14 Tagen | 28 Tagen |
| 40 | Produkt 1 | 17 | 18 |
| 41 | Produkt 2 | 21 | 24 |
| 42 | Produkt 7 | 17 | 30 |
| 43 | Produkt 10 | 20 | 31 |
| 44 | Produkt 19 | 13 | 30 |
| 45 (V) | Dissolvan 3567-1 c (Vergleich) | 6 | 6 |
| 46 (V) | Referenz (Natriumbenzoat) | 74 | 84 |

## Patentansprüche

1. Verwendung von Copolymeren, welche durch Polymerisation der Monomere (A) und (B) erhältlich sind, wobei
(A) ein Monomer der Formel (I) ist 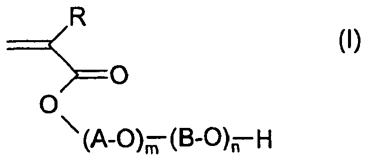 worin
A für eine C₂- bis C₄-Alkylengruppe,
B für eine von A unterschiedliche C₂- bis C₄-Alkylengruppe,
R für Wasserstoff oder Methyl,
m für eine Zahl von 1 bis 500,
n für eine Zahl von 1 bis 500 stehen, und
(B) ein ethylenisch ungesättigtes Monomer ist, das eine aliphatische Kohlenwasserstoffgruppe enthält,
zur Spaltung von Öl/Wasser-Emulsionen in Mengen von 0,0001 bis 5 Gew.-% bezogen auf den Ölgehalt der zu spaltenden Emulsion.

2. Verwendung gemäß Anspruch 1, wobei die Copolymere durch Polymerisation der Monomere (A), (B) und (C) erhältlich sind, wobei (C) ein ethylenisch ungesättigtes Monomer ist, das eine aromatische Gruppe enthält.

3. Verwendung gemäß Anspruch 1, wobei der molare Anteil von Monomer (A) 0,1 bis 99,9 % und von Monomer (B) 0,1 bis 99,9 % im Copolymer beträgt.

4. Verwendung gemäß Anspruch 2, wobei der molare Anteil von Monomer (A) 1 bis 80 %, von Monomer (B) 0.1 bis 80 %, und von Monomer (C) 0,1 bis 80 % im Copolymer beträgt.

5. Verwendung gemäß einem der Ansprüche 2 oder 4, wobei der molare Anteil von Monomer (A) 10 bis 70 %, von Monomer (B) 10 bis 60 %, und von Monomer (C) 1 bis 60 % im Copolymer beträgt.

6. Verwendung gemäß einem oder mehreren der Ansprüche 1 bis 5, wobei die Alkylenoxideinheiten (A-O)ₘ und (B-O)ₙ blockartig angeordnet sind.

7. Verwendung gemäß einem oder mehrere der Ansprüche 1 bis 4, wobei (A-O)ₘ für einen Block Propylenoxid-Einheiten und (B-O)ₙ für einen Block Ethylenoxid-Einheiten, oder (A-O)ₘ für einen Block Ethylenoxid-Einheiten und (B-O)ₙ für einen Block Propylenoxid-Einheiten stehen, und wobei der molare Anteil der Ethylenoxid-Einheiten, bezogen auf die Summe der Ethylenoxid- und Propylenoxid-Einheiten, 50 bis 98 % beträgt.

8. Verwendung gemäß Anspruch 7, wobei der molare Anteil der Ethylenoxid-Einheiten im Copolymer 55 bis 95 %, bezogen auf die Summe der Ethylenoxid- und Propylenoxid-Einheiten, beträgt.

9. Verwendung gemäß einem oder mehreren der Ansprüche 1 bis 8, worin das Monomer (B) eine Verbindung der Formel (II) ist: 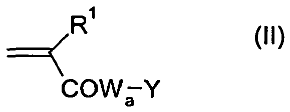 worin
R¹ für Wasserstoff oder Methyl,
Y für einen linearen, verzweigten oder cyclischen aliphatischen Kohlenwasserstoffrest mit 1 bis 30 C-Atomen, vorzugsweise 4 bis 28, insbesondere 6 bis 24 C-Atomen, der gesättigt oder ungesättigt sein kann, und der Heteroatome ausgewählt aus O, N und S enthalten kann,
Wₐ für Sauerstoff oder die Gruppe -NH- stehen.

10. Verwendung gemäß einem oder mehreren der Ansprüche 2 und 4 bis 9, worin das Monomer (C) eine Verbindung der Formeln (IIIa) oder (IIIb) ist 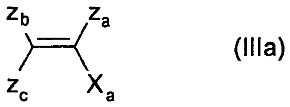 worin
Xₐ für einen aromatischen oder araliphatischen Rest mit 3 bis 30 C-Atomen, der gegebenenfalls Heteroatome ausgewählt aus O, N und S enthalten kann,
Zₐ für H oder C₁- bis C₄-Alkyl,
Z_{b} für H oder C₁- bis C₄-Alkyl, und
Z_{c} für H oder C₁- bis C₄-Alkyl stehen; 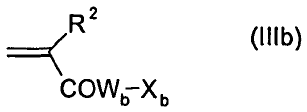
worin
R² für Wasserstoff oder Methyl,
X_{b} für einen aromatischen oder araliphatischen Rest mit 3 bis 30 C-Atomen, der gegebenenfalls Heteroatome ausgewählt aus O, N und S enthalten kann,
W_{b} für Sauerstoff oder die Gruppe -NH- stehen.

11. Verwendung von Copolymeren nach einem oder mehreren der Ansprüche 1 bis 10, wobei das Monomer (B) ein Alkylester oder Alkylamid der Acryl- oder Methacrylsäure ist, und wobei Alkyl die Bedeutung Methyl, Ethyl, Propyl, Butyl, Isobutyl, 2-Ethylhexyl, 2-Ethoxyethyl. Myristyl, Lauryl und Stearyl hat.

12. Verwendung von Copolymeren nach einem oder mehreren der Ansprüche 2 und 4 bis 11, wobei das Monomer (C) Styrol, 1-Vinylimidazol, Benzyl(Meth)acrylat, 2-Phenoxyethyl(Meth)acrylat oder Phenethyl(Meth)acrylat ist.

13. Verwendung von Copolymeren nach einem oder mehreren der Ansprüche 1 bis 12, wobei m für eine Zahl von 2 bis 50 steht.

14. Verwendung von Copolymeren nach einem oder mehreren der Ansprüche 1 bis 13, wobei n für eine Zahl von 2 bis 50 steht.

15. Verwendung von Copolymeren nach Anspruch 10, wobei Xₐ oder X_{b} für aromatische oder araliphatische Reste mit 6 bis 24 C-Atomen stehen.

16. Verwendung von Copolymeren nach einem oder mehreren der Ansprüche 1 bis 15, wobei (n + m) 5 bis 80 beträgt.

## Claims

1. The use of copolymers obtainable by polymerization of monomers (A) and (B), wherein
(A) is a monomer of formula (I) 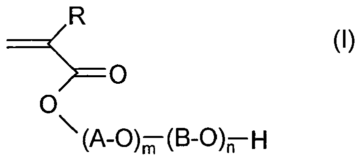 where
A is a C₂ to C₄ alkylene group,
B is a C₂ to C₄ alkylene group other than A,
R is hydrogen or methyl,
m is from 1 to 500,
n is from 1 to 500, and
(B) is an ethylenically unsaturated monomer which contains an aliphatic hydrocarbon group,
for breaking oil/water emulsions in amounts of 0.0001 % to 5% by weight based on the oil content of the emulsion to be broken.

2. The use according to claim 1 wherein the copolymers are obtainable by polymerization of monomers (A), (B) and (C) wherein (C) is an ethylenically unsaturated monomer which contains an aromatic group.

3. The use according to claim 1 wherein the molar fraction of monomer (A) is in the range from 0.1 % to 99.9% and of monomer (B) is in the range from 0.1% to 99.9% in the copolymer.

4. The use according to claim 2 wherein the molar fraction of monomer (A) is from 1% to 80%, of monomer (B) is from 0.1 % to 80% and of monomer (C) is from 0.1 % to 80% in the copolymer.

5. The use according to either of claims 2 and 4 wherein the molar fraction of monomer (A) is from 10% to 70%, of monomer (B) is from 10% to 60% and of monomer (C) is from 1% to 60% in the copolymer.

6. The use according to one or more of claims 1 to 5 wherein the alkylene oxide units (A-O)ₘ and (B-O)ₙ are arranged blockwise.

7. The use according to one or more of claims 1 to 4 wherein (A-O)ₘ represents a block of propylene oxide units and (B-O)ₙ represents a block of ethylene oxide units, or (A-O)ₘ represents a block of ethylene oxide units and (B-O)ₙ represents a block of propylene oxide units, and wherein the molar fraction of ethylene oxide units, based on the sum total of ethylene oxide and propylene oxide units, is from 50% to 98%.

8. The use according to claim 7 wherein the molar fraction of ethylene oxide units in the copolymer is from 55% to 95%, based on the sum total of ethylene oxide and propylene oxide units.

9. The use according to one or more of claims 1 to 8 wherein said monomer (B) is a compound of formula (II): 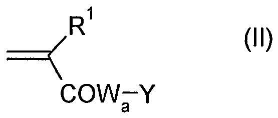 where
R¹ is hydrogen or methyl,
Y is a linear, branched or cyclic aliphatic hydrocarbon radical of 1 to 30 carbon atoms, preferably 4 to 28 carbon atoms and particularly 6 to 24 carbon atoms, which may be saturated or unsaturated, and which may contain heteroatoms selected from O, N and S,
Wₐ is oxygen or the group -NH-.

10. The use according to one or more of claims 2 and 4 to 9 wherein said monomer (C) is a compound of formulae (IIIa) or (IIIb) 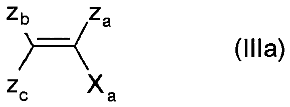 where
Xₐ is an aromatic or araliphatic radical of 3 to 30 carbon atoms,which may optionally contain heteroatoms selected from O, N and S,
Zₐ is H or C₁ to C₄ alkyl,
Z_{b} is H or C₁ to C₄ alkyl, and
Z_{c} is H or C₁ to C₄ alkyl; 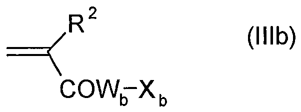
where
R² is hydrogen or methyl,
X_{b} is an aromatic or araliphatic radical of 3 to 30 carbon atoms,which may optionally contain heteroatoms selected from O, N and S,
W_{b} is oxygen or the group -NH-.

11. The use of copolymers according to one or more of claims 1 to 10 wherein said monomer (B) is an alkyl ester or alkylamide of acrylic or methacrylic acid and wherein alkyl has the meaning methyl, ethyl, propyl, butyl, isobutyl, 2-ethylhexyl, 2-ethoxyethyl, myristyl, lauryl and stearyl.

12. The use of copolymers according to one or more of claims 2 and 4 to 11 wherein said monomer (C) is styrene, 1-vinylimidazole, benzyl (meth)acrylate, 2-phenoxyethyl (meth)acrylate or phenethyl (meth)acrylate.

13. The use of copolymers according to one or more of claims 1 to 12 wherein m is from 2 to 50.

14. The use of copolymers according to one or more of claims 1 to 13 wherein n is from 2 to 50.

15. The use of copolymers according to claim 10 wherein Xₐ or X_{b} represent aromatic or araliphatic radicals of 6 to 24 carbon atoms.

16. The use of copolymers according to one or more of claims 1 to 15 wherein (n + m) is from 5 to 80.

## Revendications

1. Utilisation de copolymères, qui peuvent être obtenus par polymérisation des monomères (A) et (B), où
(A) représente un monomère de formule (I) 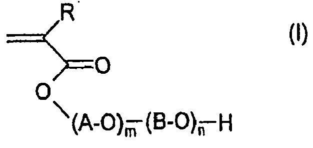 où
A représente un groupe C₂-C₄-alkylène,
B représente un groupe C₂-C₄-alkylène différent de A,
R représente hydrogène ou méthyle,
m vaut un nombre de 1 à 500,
n vaut un nombre de 1 à 500, et
(B) représente un monomère éthyléniquement insaturé qui contient un groupe hydrocarboné aliphatique,
pour la dissociation d'émulsions huile-dans-eau en des quantités de 0,0001 à 5% en poids par rapport à la teneur en huile de l'émulsion à dissocier.

2. Utilisation selon la revendication 1, les copolymères pouvant être obtenus par polymérisation des monomères (A), (B) et (C), (C) représentant un monomère éthyléniquement insaturé qui contient un groupe aromatique.

3. Utilisation selon la revendication 1, la proportion molaire du monomère (A) représentant 0,1 à 99,9% et du monomère (B) représentant 0,1 à 99,9% dans le copolymère.

4. Utilisation selon la revendication 2, la proportion molaire du monomère (A) représentant 1 à 80%, du monomère (B) représentant 0,1 à 80% et du monomère (C) représentant 0,1 à 80% dans le copolymère.

5. Utilisation selon l'une quelconque des revendications 2 ou 4, la proportion molaire du monomère (A) représentant 10 à 70%, du monomère (B) représentant 10 à 60%, et du monomère (C) représentant 1 à 60% dans le copolymère.

6. Utilisation selon l'une ou plusieurs des revendications 1 à 5, les unités d'oxyde d'alkylène (A-O)ₘ et (B-O)ₙ étant disposées en blocs.

7. Utilisation selon l'une ou plusieurs des revendications 1 à 4, (A-O)ₘ représentant un bloc d'unités d'oxyde de propylène et (B-O)ₙ représentant un bloc d'unités d'oxyde d'éthylène, ou (A-O)ₘ représentant un bloc d'unités d'oxyde d'éthylène et (B-O)ₙ représentant un bloc d'unités d'oxyde de propylène, et la proportion molaire des unités d'oxyde d'éthylène, par rapport à la somme des unités d'oxyde d'éthylène et d'oxyde de propylène, valant 50 à 98%.

8. Utilisation selon la revendication 7, la proportion molaire des unités d'oxyde d'éthylène dans le copolymère représentant 55 à 95%, par rapport à la somme des unités d'oxyde d'éthylène et d'oxyde de propylène.

9. Utilisation selon l'une ou plusieurs des revendications 1 à 8, le monomère (B) représentant un composé de formule (II) : 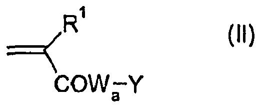 où
R¹ représente hydrogène ou méthyle,
Y représente un radical hydrocarboné aliphatique, linéaire, ramifié ou cyclique, comprenant 1 à 30 atomes de carbone, de préférence 4 à 28, en particulier 6 à 24 atomes de carbone, qui peut être saturé ou insaturé, et qui peut contenir des hétéroatomes choisis parmi O, N et S,
Wₐ représente oxygène ou le groupe -NH-.

10. Utilisation selon l'une ou plusieurs des revendications 2 et 4 à 9, le monomère (C) représentant un composé des formules (IIIa) ou (IIIb) 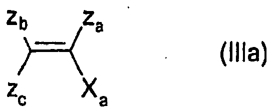 où
Xₐ représente un radical aromatique ou araliphatique comprenant 3 à 30 atomes de carbone, qui peut le cas échéant contenir des hétéroatomes choisis parmi O, N et S,
Zₐ représente H ou C₁-C₄-alkyle,
Z_{b} représente H ou C₁-C₄-alkyle, et
Z_{c} représente H ou C₁-C₄-alkyle ; 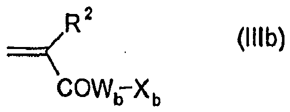
où
R² représente hydrogène ou méthyle,
X_{b} représente un radical aromatique ou araliphatique comprenant 3 à 30 atomes de carbone, qui peut le cas échéant contenir des hétéroatomes choisis parmi O, N et S,
W_{b} représente oxygène ou le groupe -NH-.

11. Utilisation de copolymères selon l'une ou plusieurs des revendications 1 à 10, le monomère (B) représentant un ester alkylique ou un alkylamide de l'acide acrylique ou méthacrylique et alkyle présentant la signification méthyle, éthyle, propyle, butyle, isobutyle, 2-éthylhexyle, 2-éthoxyéthyle, myristyle, lauryle et stéaryle.

12. Utilisation de copolymères selon l'une ou plusieurs des revendications 2 et 4 à 11, le monomère (C) représentant styrène, 1-vinylimidazole, (méth)acrylate de benzyle, (méth)acrylate de 2-phénoxyéthyle ou (méth)acrylate de phénéthyle.

13. Utilisation de copolymères selon l'une ou plusieurs des revendications 1 à 12, m valant un nombre de 2 à 50.

14. Utilisation de copolymères selon l'une ou plusieurs des revendications 1 à 13, n valant un nombre de 2 à 50.

15. Utilisation de copolymères selon la revendication 10, Xₐ ou X_{b} représentant des radicaux aromatiques ou araliphatiques comprenant 6 à 24 atomes de carbone.

16. Utilisation de copolymères selon l'une ou plusieurs des revendications 1 à 15, (n+m) valant 5 à 80.
